# EUROPÄISCHE PATENTSCHRIFT

(11) **EP 0 518 093 B1**
(45) Veröffentlichungstag und Bekanntmachung des Hinweises auf die Patenterteilung: **28.02.1996**
(21) Anmeldenummer: 92108560.1
(22) Anmeldetag: 21.05.1992
(51) Int. Cl.: C08F 297/08

(54) **Propylen-Ethylen-Copolymerisate mit hohem Kautschukgehalt**
Propylene ethylene copolymers with high rubber content
Copolymères-propylène-éthylène à teneur élevée en caoutchouc

(30) Priorität: 12.06.1991 DE 4119345
(43) Veröffentlichungstag der Anmeldung: 16.12.1992
(73) Patentinhaber: BASF Aktiengesellschaft, D-67063 Ludwigshafen (DE)
(72) Erfinder: Schwager, Harald, Dr., W-6720 Speyer (DE); Hungenberg, Klaus-Dieter, Dr., W-6943 Birkenau (DE); Kerth, Juergen, Dr., W-6719 Carlsberg (DE)

(56) Entgegenhaltungen:
- EP-A- 0 131 268
- EP-A- 0 355 603
- EP-A- 0 383 099
- EP-A- 0 438 068
- EP-A- 0 442 316
- EP-A- 0 462 448

## Beschreibung

Die vorliegende Erfindung betrifft Propylen-Ethylen-Copolymerisate mit hohem Kautschukgehalt, erhältlich durch zweistufige Polymerisation aus der Gasphase heraus in einem bewegten Festbett, mittels eines Ziegler-Natta-Katalysatorsystems, das neben einer titanhaltigen Feststoffkomponente noch als Cokatalysator eine Aluminiumverbindung enthält, wobei man
in einer ersten Polymerisationsstufe bei einem Druck von 20 bis 40 bar, einer Temperatur von 60 bis 90°C und einer mittleren Verweilzeit des Reaktionsgemisches von 1 bis 5 Stunden Propylen polymerisiert und anschließend
in einer zweiten Polymerisationsstufe bei einem Druck von 5 bis 30 bar, wobei dieser Druck wenigstens 7 bar unter dem Druck der ersten Polymerisationsstufe liegt, einer Temperatur von 65 bis 100°C und einer mittleren Verweilzeit des Reaktionsgemisches von 1 bis 5 Stunden, dem aus der ersten Polymerisationsstufe ausgebrachten Polymerisat ein Gemisch aus Propylen und Ethylen hinzupolymerisiert, dabei das Verhältnis der Partialdrücke zwischen Propylen und Ethylen im Bereich von 0,5 : 1 bis 5 : 1 einstellt, das Gewichtsverhältnis zwischen den in der ersten und den in der zweiten Polymerisationsstufe umgesetzten Monomeren so bemißt, daß es im Bereich von 2,5 : 1 bis 1 : 2,5 liegt und die Polymerisation in der zweiten Polymerisationsstufe in Gegenwart eines C₁-C₈-Alkanols und einer zusätzlich eingebrachten, als Cokatalysator dienenden Aluminiumverbindung vornimmt.

Außerdem betrifft die Erfindung ein Verfahren zur Herstellung dieser Propylen-Ethylen-Copolymerisate sowie Folien und Formkörper aus diesen Copolymerisaten.

Durch Polymerisation an Ziegler-Natta-Katalysatoren erhältliche Propylen-Ethylen-Copolymerisate sind bereits in einer Reihe von Patentschriften beschrieben worden. Aus der US-A 4 260 710 ist bekannt, Homo- und Copolymerisate von α-Olefinen durch Polymerisation mit Hilfe von Ziegler-Natta-Katalysatoren in einem Rührkessel herzustellen. Die dabei verwendeten Katalysatorkomponenten enthalten u.a. Verbindungen des mehrwertigen Titans, Aluminiumhalogenide und/oder -alkyle, sowie Elektronendonorverbindungen, wobei meistens Silane, Ester, Ether, Ketone oder Lactone verwendet werden (EP-B 14 523, EP-B 45 977, EP-B 86 473, EP-A 171 200, US-A 4 857 613).

Des weiteren sind eine Reihe von Verfahren zur Darstellung von Propylen-Ethylen-Blockcopolymeren mit Hilfe eines Ziegler-Natta-Katalysatorsystems bekannt (US-A 4 454 299, US-A 4 455 405, ZA-B 0084/3561, ZA-B 0084/3563, ZA-B 0084/5261, GB-B 1 032 945), bei denen man zunächst gasförmiges Propylen in einer ersten Reaktionsstufe polymerisiert und das daraus erhältliche Homopolymerisat anschließend in eine zweite Reaktionsstufe bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Die dabei erhältlichen Copolymerisate weisen meist eine ausgezeichnete Schlagzähigkeit, zugleich aber auch eine im Vergleich zu reinem Polypropylen deutlich verminderte Steifigkeit auf. Für einige Anwendungsbereiche werden aber vorwiegend Copolymerisate benötigt, welche neben einer hohen Schlagzähigkeit auch gute Steifigkeitswerte aufweisen.

Die Herstellung von Propylen-Ethylen-Blockcopolymeren mit Hilfe eines Ziegler-Natta-Katalysatorsystems wird auch in der EP-A-355 603, der EP-A-131 268 und der älteren Anmeldung DE-A-4 001 157.7 beschrieben. Dort stellt man zunächst in einer ersten Polymerisationsstufe ein Propylenhomopolymerisat her und polymerisiert diesem anschließend in einer zweiten Polymerisationsstufe ein Gemisch aus Propylen und Ethylen hinzu. Die dabei erhältlichen Polymerisate weisen neben einer hohen Kerbschlagzähigkeit eine günstige Kornverteilung und sehr niedrige Gehalte an unerwünschten Katalysatorresten, insbesondere an Titan und Chlor, auf. Bei diesen Polymerisaten beobachtet man jedoch häufig eine relativ hohe Neigung zum kleißbruch, so daß diese als Materialien für Produkte, bei denen die optischen Eigenschaften wichtig werden, nur bedingt brauchbar sind. Unter Weißbruch versteht man dabei die an vielen Kunststoffen während der Verstreckung auftretende Weipfärbung der vorher transparenten Probe in einzelnen Bereichen.

Bei der Herstellung von Propylen-Ethylen-Copolymerisaten nach einem der oben beschriebenen zweistufigen Verfahren ist in der zweiten Polymerisationsstufe nach einigen Stunden häufig eine Belagbildung an der Reaktorwand feststellbar. Diese Belagbildung erschwert die Temperatur- und Reaktionssteuerung bei der Copolymerisation. Dies hat zur Folge, daß die Reaktorlaufzeiten verkürzt werden müssen, um in jedem Fall einen kontrollierten Reaktionsablauf gewährleisten zu können. Kürzere Reaktorlaufzeiten wiederum bewirken eine Erhöhung der Rüstzeiten und damit der Produktionskosten, so daß die Belagbildung die Wirtschaftlichkeit der Herstellung derartiger Propylen-Ethylen-Copolymerisate beeinträchtigt.

Aus den älteren Anmeldungen EP-A 438 068 und EP-A 442 316 sind Propylen-Ethylen-Copolymerisate bekannt, wobei bei deren Herstellung in der zweiten Polymerisationsstufe auf die Zugabe einer Aluminiumverbindung verzichtet wird. Weiterhin werden in der EP-A 131 268 Propylen-Ethylen-Copolymerisate beschrieben, die u.a. eine hohe Schlagzähigkeit bei zugleich geringer, aber noch vorhandener Neigung zum Weißbruch aufweisen.

Der vorliegenden Erfindung lag daher die Aufgabe zugrunde, den geschilderten Nachteilen abzuhelfen und Propylen-Ethylen-Copolymerisate mit einer hohen Schlagzähigkeit, einer geringen Neigung zum Weißbruch und einer ausreichend hohen Steifigkeit herzustellen und darüber hinaus die bei der Herstellung derartiger Copolymerisate häufig auftretende Belagbildung zu unterdrücken.

Demgemäß wurden die eingangs definierten neuen Propylen-Ethylen-Copolymerisate mit hohem Kautschukgehalt gefunden.

Das zu diesen Copolymerisaten führende Verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man meistens eine Reihe von mehreren hintereinander geschalteten Rührkesseln einsetzt. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate gut bewährt haben. Als besonders bevorzugter Träger werden Silicium- und Aluminiumoxide, sowie Aluminiumsilikate der Formel SiO₂·aAl₂O₃ verwendet, wobei a für einen Wert von 0,001 bis 2, insbesondere von 0,01 bis 0,5 steht.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten, wobei das Halogen vorzugsweise in Form eines Halogenierungsmittels oder aber in molekularer Form in die titanhaltige Feststoffkomponente eingebracht wird.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 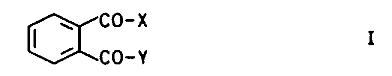 verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆- bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der titanhaltigen Feststoffkomponente wird bevorzugt folgendes dreistufige Verfahren angewandt:

In der ersten Stufe versetzt man zunächst einen feinteiligen Träger, bevorzugt Siliciumoxid oder ein Aluminiumsilikat der Formel SiO₂·aAl₂O₃ - wobei a für eine Zahl im Bereich von 0,001 bis 2, insbesondere im Bereich von 0,01 bis 0,5 steht - der in der Regel einen Teilchendurchmesser von 0,1 bis 1000 µm, insbesondere von 10 bis 300 µm, ein Porenvolumen von 0,1 bis 10 cm³/g, insbesondere von 1,0 bis 4,0 cm³/g, und eine spezifische Oberfläche von 10 bis 1000 m/g, insbesondere von 100 bis 500 m/g, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommen dabei Aluminiumverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

R¹ ₙSi(OR)₄₋ₙ II

wobei
R¹ eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe, R eine C₁- bis C₂₀-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Die Polymerisation des Propylens wird in der ersten Polymerisationsstufe bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind dabei Drücke von 20 bis 35 bar, Temperaturen von 65 bis 85°C und mittlere Verweilzeiten von 1,5 bis 4 Stunden. In einer bevorzugten Verfahrensausführung wählt man die Reaktionsbedingungen so, daß in der ersten Polymerisationsstufe pro mmol der Aluminiumkomponente 0,05 bis 2 kg, bevorzugt 0,1 bis 1,5 kg, Polypropylen gebildet werden.

Dieses Polypropylen wird nach Beendigung der Reaktion mit dem Katalysator aus der ersten Polymerisationsstufe ausgetragen und in die zweiten Polymerisationsstufe eingeführt, wo diesem ein Gemisch von Propylen und Ethylen hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die mittlere Verweilzeit des Polymerisats beträgt 1 bis 5 Stunden, bevorzugt 1,5 bis 4 Stunden. In der zweiten Polymerisationsstufe liegt das Verhältnis der Partialdrücke zwischen Propylen und Ethylen im Bereich von 0,5 : 1 bis 5 : 1, insbesondere im Bereich von 1 : 1 bis 5 : 1.

Erfindungsgemäß wird die Polymerisation in der zweiten Polymerisationsstufe bei einer Temperatur von 65 bis 100°C, insbesondere von 70 bis 90°C, und in Gegenwart eines C₁-C₈-Alkanols durchgeführt. Bevorzugt wird dabei ein C₁-C₄-Alkanol verwendet, insbesondere u.a. Methanol, Ethanol, n-Propanol, n-Butanol und ganz besonders Isopropanol. Die hinzugefügten C₁-C₈-Alkanole beeinflussen dabei die Aktivität des Ziegler-Natta-Katalysators und reduzieren die Belagbildung an der Reaktorwand. Die Menge des hinzugefügten C₁-C₈-Akkanols wird dabei zweckmäßigerweise so bemessen, daß das Molverhältnis zwischen der Aluminiumverbindung und dem C₁-C₈-Alkanol 0,1 : 1 bis 10 : 1, insbesondere 0,2 : 1 bis 5 : 1 beträgt.

Bei der Durchführung des zu den erfindungsgemäßen Propylen-Ethylen-Copolymerisaten führenden Verfahrens muß weiterhin darauf geachtet werden, daß das Gewichtsverhältnis zwischen den in der ersten und den in der zweiten Polymerisationsstufe umgesetzten Monomeren auf Werte von 2,5 : 1 bis 1 : 2,5, insbesondere auf 2,0 : 1 bis 1 : 2,5 eingestellt wird. Propylen-Ethylen-Copolymerisate mit besonders günstigen Eigenschaften, insbesondere einem deutlich vermindertem Weißbruch sind vor allem dann erhältlich, wenn man beim Herstellungsverfahren das Gewichtsverhältnis zwischen den in der ersten und den in der zweiten Polymerisationsstufe umgesetzten Monomeren auf 1,0 : 1 bis 1 : 2,5 einstellt. Auf diese Weise erhält man Propylen-Ethylen-Copolymerisate, die sich u.a. durch einen hohen Kautschukgehalt, d.h. durch einen hohen Anteil von, in Xylol löslichen Propylen-Ethylen-Copolymerisaten auszeichnen.

Nach einer weiteren Ausführungsform des zu den erfindungsgemäßen Propylen-Ethylen-Copolymerisaten führenden Verfahrens führt man die Polymerisation in der zweiten Polymerisationsstufe in Gegenwart einer zusätzlich eingebrachten, als Cokatalysator dienenden Aluminiumverbindung durch.

Dazu wird die Aluminiumverbindung vor oder während der Polymerisation in die zweite Polymerisationsstufe eindosiert. Geeignete Aluminiumverbindungen sind dabei neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium. Üblicherweise wird bei dieser speziellen Ausführungsform des zu den erfindungsgemäßen Propylen-Ethylen-Copolymerisaten führenden Verfahrens die Aluminiumverbindung in solchen Mengen in die zweite Polymerisationsstufe eingebracht, daß das Gewichtsverhältnis zwischen der in der ersten und der in der zweiten Polymerisationsstufe vorliegenden Aluminiumverbindung 5 : 1 bis 0,5 : 1, insbesondere 3 : 1 bis 1 : 1, beträgt.

Weiterhin besteht die Möglichkeit, in die zweite Polymerisationsstufe neben der Aluminiumverbindung noch die als Katalysator wirksame titanhaltige Feststoffkomponente einzuführen. Die titanhaltige Feststoffkomponente, die bereits im Zusammenhang mit der Beschreibung des Katalysatorsystems eingehend erläutert wurde, kann ebenso wie die Aluminiumverbindung sowohl vor als auch während der Polymerisation in die zweite Polymerisationsstufe eingebracht werden. Üblicherweise wird dabei das Gewichtsverhältnis zwischen der in der ersten und der in der zweiten Polymerisationsstufe vorliegenden titanhaltigen Feststoffkomponente auf 5 : 1 bis 0,5 : 1, insbesondere auf 3 : 1 bis 1 : 1, eingestellt.

Das Molekulargewicht der erfindungsgemäßen Propylen-Ethylen-Copolymerisate kann wie üblich durch Zugabe von Reglern, insbesondere von Wasserstoff kontrolliert werden.

Die erfindungsgemäßen Propylen-Ethylen-Copolymerisate enthalten neben Blöcken von Polypropylen Blöcke von Propylen-Ethylen-Copolymerisaten mit statistischer Monomerverteilung. Diese Copolymerisate weisen mittlere Molmassen von 10 000 bis 500 000 und Schmelzflußindices von 0,1 bis 100 g/10 min, vorzugsweise von 0,2 bis 10 g/10 min auf, jeweils gemessen nach DIN 53 735 bei 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Die erfindungsgemäßen Propylen-Ethylen-Copolymerisate weisen neben einer guten Steifigkeit und Kerbschlagzähigkeit insbesondere auch eine, gegenüber den bisher bekannten Propylen-Ethylen-Copolymerisaten deutlich verringerte Neigung zum Weißbruch auf. Bei der Herstellung der erfindungsgemäßen Propylen-Ethylen-Copolymerisate ist die Belagbildung in der zweiten Polymerisationsstufe deutlich weniger ausgeprägt, so daß das Verfahren erheblich länger störungsfrei durchgeführt werden kann.

Aufgrund ihrer guten mechanischen und optischen Eigenschaften eignen sich solche Copolymerisate insbesondere zur Herstellung von Folien, Rohren, Belägen, Fasern, Hohlkörpern, Spritzgußartikeln und von Formteilen für den Fahrzeugbau.

### Beispiel 1 (nicht erfindungsgemäß)

Die Herstellung der Propylen-Ethylen-Copolymerisate erfolgte in zwei hintereinander geschalteten Rührautoklaven mit einem Nutzvolumen von jeweils 180 l in Anwesenheit von Wasserstoff als Molekulargewichtsregler. Beide Reaktoren enthielten ein bewegtes Festbett aus feinteiligem Polypropylen.

In den ersten Polymerisationsreaktor wurde bei einem Druck von 32 bar und einer Temperatur von 80°C gasförmiges Propylen eingeleitet und dieses kontinuierlich mit Hilfe eines Ziegler-Natta-Katalysators polymerisiert. Dabei wurden pro Stunde 1 g einer titanhaltigen Feststoffkomponente, 60 mmol Triethylaluminium und 6 mmol Dimethoxyisobutylisopropylsilan als Katalysatorbestandteile verwendet. Die mittlere Verweilzeit des Reaktionsgemisches betrug 2 Stunden. Bei diesem Verfahren wurden pro mmol der Aluminiumverbindung 0,4 kg Polypropylen erzeugt. Die titanhaltige Feststoffkomponente wurde nach folgendem Verfahren hergestellt.

Dazu versetzte man in einer ersten Stufe SiO₂, welches einen Teilchendurchmesser von 20 bis 45 µm, ein Porenvolumen von 1,75 cm³/g und eine Oberfläche von 320 m/g aufwies, mit in n-Heptan gelöstem Butyl-octylmagnesium, wobei pro Mol SiO₂ 0,3 mol der Magnesiumverbindung eingesetzt wurden. Die Lösung wurde 1,5 Stunden lang bei 90°C gerührt, danach auf 20°C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurden unter ständigem Rühren 3 mol Ethanol, bezogen auf 1 mol Magnesium hinzugefügt. Dieses Gemisch wurde 1,5 Stunden bei 80°C gerührt und danach mit 6 mol Titantetrachlorid und 0,5 mol Phthalsäure-di-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125°C mit einer 15 gewichtsprozentigen Lösung von Titantetrachlorid in Ethylbenzol.

Danach wurde das Festprodukt durch Filtration vom Extraktionsmittel getrennt und solange mit n-Heptan gewaschen, bis dieses nur mehr 0,3 Gew.-% Titantetrachorid enthielt.

Die daraus resultierende titanhaltige Feststoffkomponente enthielt 3,1 Gew.-% Titan, 7,5 Gew.-% Magnesium und 28,3 Gew.-% Chlor.

Das im ersten Reaktor gebildete Polypropylen wurde zusammen mit dem Katalysator in den zweiten Rührautoklaven übergeführt und dort dem Polymerisat bei einem Gesamtdruck von 20 bar, einer Temperatur von 70°C und einer mittleren Verweilzeit von 2 Stunden in Anwesenheit von 44 mmol Isopropanol ein Gemisch von Propylen und Ethylen hinzupolymerisiert. Das Verhältnis der Partialdrücke zwischen Propylen und Ethylen betrug dabei 2,33. Das Gewichtsverhältnis zwischen dem im ersten Reaktor gebildeten Polypropylen und dem im zweiten Reaktor entstandenen Copolymerisat lag bei 1,86. Bei der Polymerisation wurden im zweiten Reaktor pro mmol der Aluminiumkomponente 0,73 mmol Isopropanol verwendet. Die gesamten Reaktionsparameter können der nachfolgenden Tabelle 1 entnommen werden.

Dabei erhielt man ein Propylen-Ethylen-Copolymerisat mit einem Schmelzflußindex von 2,0 g/10 min, bei 230°C und 2,16 kg (nach DIN 53 735). Die mechanischen und optischen Eigenschaften der dabei erhaltenen Propylen-Ethylen-Copolymerisate sind in der nachfolgenden Tabelle 2 aufgeführt.

### Beispiele 2 bis 5 (nicht erfindungsgemäß)

Analog dem Beispiel 1 wurden mit Hilfe eines Ziegler-Natta-Katalysatorsystems Propylen und Ethylen polymerisiert, jedoch die Parameter Druck, Temperatur, Mengen der Katalysatorkomponenten, der Monomeren, des Isopropanols, sowie das Gewichtsverhältnis zwischen den in der ersten und den in der zweiten Polymerisationsstufe umgesetzten Monomeren entsprechend der Tabelle 1 verändert.

Die Eigenschaften der dabei erhaltenen Propylen-Ethylen-Copolymerisate können der nachfolgenden Tabelle 2 entnommen werden.

**Tabelle 1**

| Reaktionsparameter | | | | | |
|---|---|---|---|---|---|
| | Beispiele | | | | |
| | 1 | 2 | 3 | 4 | 5 |
| Polymerisationsstufe 1 | | | | | |
| - titanhaltige Feststoffkomponente [g/h] | 1 | 1 | 0,9 | 1,5 | 0,9 |
| - Aluminiumverbindung [mmol/h] | 60 | 60 | 60 | 60 | 60 |
| - Dimethoxyisobutylisopropylsilan [mmol/h] | 6 | 6 | 6 | 6 | 6 |
| - Druck [bar] | 32 | 32 | 32 | 30 | 28 |
| - Temperatur [°C] | 80 | 80 | 80 | 80 | 70 |

| Polymerisationsstufe 2 | | | | | |
|---|---|---|---|---|---|
| | | | | | |
| - Isopropanol [mmol/h] | 44 | 30 | 35 | 30 | 30 |
| - Druck [bar] | 20 | 20 | 20 | 20 | 20 |
| - Temperatur [°C] | 70 | 70 | 70 | 70 | 70 |
| - Partialdruckverhältnis Propylen : Ethylen | 2,33 | 2,33 | 2,33 | 2,33 | 2,33 |
| - Gewichtsverhältnis | 1,86 | 1,40 | 1,17 | 1,0 | 0,95 |
| umgesetzte Monomere in der ersten : | | | | | |
| umgesetzte Monomere in der zweiten Stufe | | | | | |

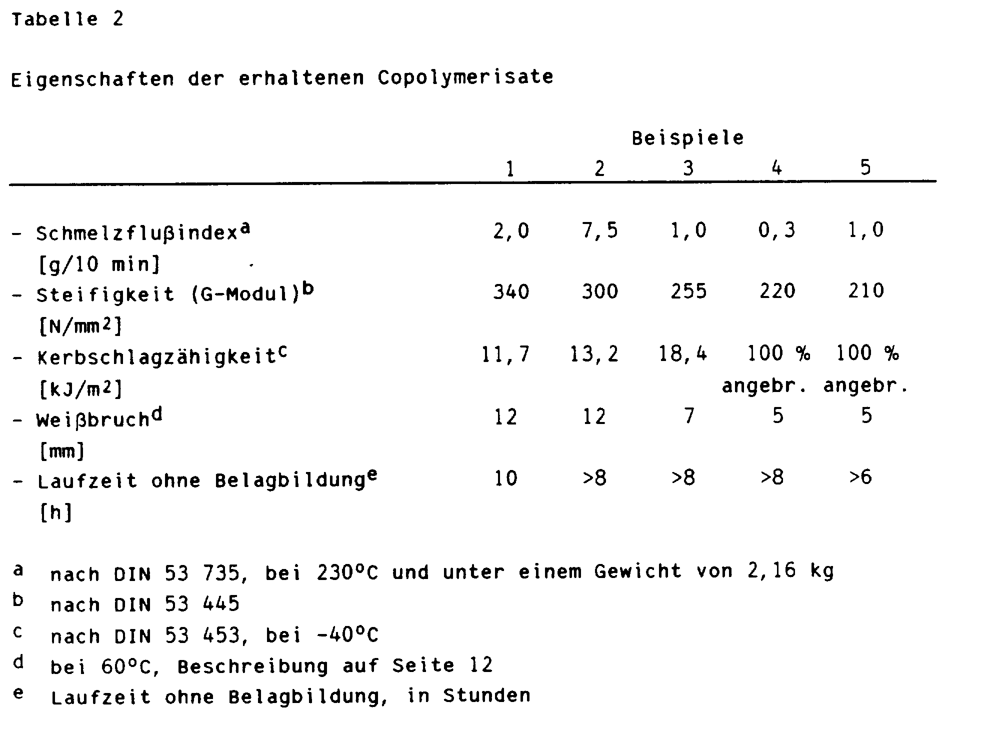

### Bestimmung des Weißbruchs:

Der Weißbruch wurde mit Hilfe einer Fallbolzenapparatur nach DIN 53 443 Teil 1 ermittelt, wobei ein Fallbolzen mit einer Masse von 250 g, einem Stoßkörper mit 5 mm Durchmesser und einem Kalottenradius von 25 mm verwendet wurde. Die Fallhöhe betrug 50 cm.

Als Probekörper wurde eine spritzgegossene Rundscheibe mit einem Durchmesser von 60 mm und einer Dicke von 2 mm verwendet. Der Probekörper wurde bei einer Massetemperatur von 250°C und einer Werkzeugoberflächentemperatur von 30°C spritzgegossen.

Die Prüfung erfolgte bei einer Temperatur von 60°C, wobei jeder Probekörper nur jeweils einem Stoßversuch unterworfen wurde. Dabei wurde zunächst der Probekörper auf einen Auflagering gelegt, ohne daß dieser eingespannt wurde, und anschließend wurde der Fallbolzen ausgelöst. Zur Mittelwertbildung wurden jeweils 5 Probekörper geprüft.

Der Durchmesser der sichtbaren Weißbruchmarkierung ist in mm angegeben und wurde dadurch ermittelt, daß man diesen auf der dem Stoß abgewandten Seite der Rundscheibe in Fließrichtung und senkrecht dazu maß und aus beiden Werten den Mittelwert bestimmte.

### Beispiele 6 bis 9

Analog den Beispielen 1 bis 5 wurden mit Hilfe eines Ziegler-Natta-Katalysatorsystems Propylen und Ethylen polymerisiert und dabei die jeweiligen Reaktionsparamter innerhalb der durch die Beschreibung vorgegebenen Grenzen variiert. Die genauen Werte sind in der nachfolgenden Tabelle 3 aufgezeichnet. Weiterhin wurde dem Reaktionsgemisch in der zweiten Polymerisationsstufe während der Polymerisation kontinuierlich Triethylaluminium hinzugefügt. Im Beispiel 9 wurde dem Reaktionsgemisch in der zweiten Polymerisationsstufe pro Stunde zusätzlich noch 0,4 g titanhaltige Feststoffkomponente beigemischt. Die genauen Mengenangaben können der nachfolgenden Tabelle 3 entnommen werden.

Die Eigenschaften der dabei erhaltenen Propylen-Ethylen-Copolymerisate sind aus der nachfolgenden Tabelle 4 ersichtlich.

### Vergleichsbeispiel A

Analog den erfindungsgemäßen Beispielen 1 bis 9 wurde mit Hilfe eines Ziegler-Natta-Katalysatorsystems Propylen und Ethylen polymerisiert, wobei die Reaktionstemperatur in der zweiten Polymerisationsstufe auf 50°C gesenkt wurde und außerdem auf die Zugabe von Isopropanol verzichtet wurde. Die genauen Reaktionsparameter können der nachfolgenden Tabelle 3 entnommen werden.

Die Eigenschaften des dabei erhaltenen Propylen-Ethylen-Copolymerisats sind aus der nachfolgenden Tabelle 4 ersichtlich.

**Tabelle 3**

| Reaktionsparameter | | | | | |
|---|---|---|---|---|---|
| | Beispiele | | | | Vergleichsbeispiel |
| | 6 | 7 | 8 | 9 | A |
| Polymerisationsstufe 1 | | | | | |
| - titanhaltige Feststoffkomponente [g/h] | 0,9 | 1,1 | 1,0 | 0,6 | 1 |
| - Aluminiumverbindung [mmol/h] | 60 | 40 | 60 | 60 | 60 |
| - Dimethoxyisobutylisopropylsilan [mmol/h] | 6 | 6 | 6 | 6 | 6 |
| - Druck [bar] | 30 | 30 | 30 | 30 | 32 |
| - Temperatur [°C] | 80 | 80 | 80 | 80 | 80 |

| Polymerisationsstufe 2 | | | | | |
|---|---|---|---|---|---|
| | | | | | |
| - Isopropanol [mmol/h] | 30 | 30 | 30 | 30 | - |
| - Aluminiumverbindung [mmol/h] | 30 | 60 | 60 | 30 | - |
| - titanhaltige Feststoffkomponente [g/h] | - | - | - | 0,4 | - |
| - Druck [bar] | 20 | 20 | 20 | 20 | 20 |
| - Temperatur [°C] | 70 | 70 | 70 | 70 | 50 |
| - Partialdruckverhältnis Propylen : Ethylen | 2,33 | 2,33 | 2,33 | 2,33 | 2,33 |
| - Gewichtsverhältnis | 0,81 | 0,75 | 0,62 | 0,61 | 1,90 |
| umgesetzte Monomere in der ersten : | | | | | |
| umgesetzte Monomere in der zweiten Stufe | | | | | |

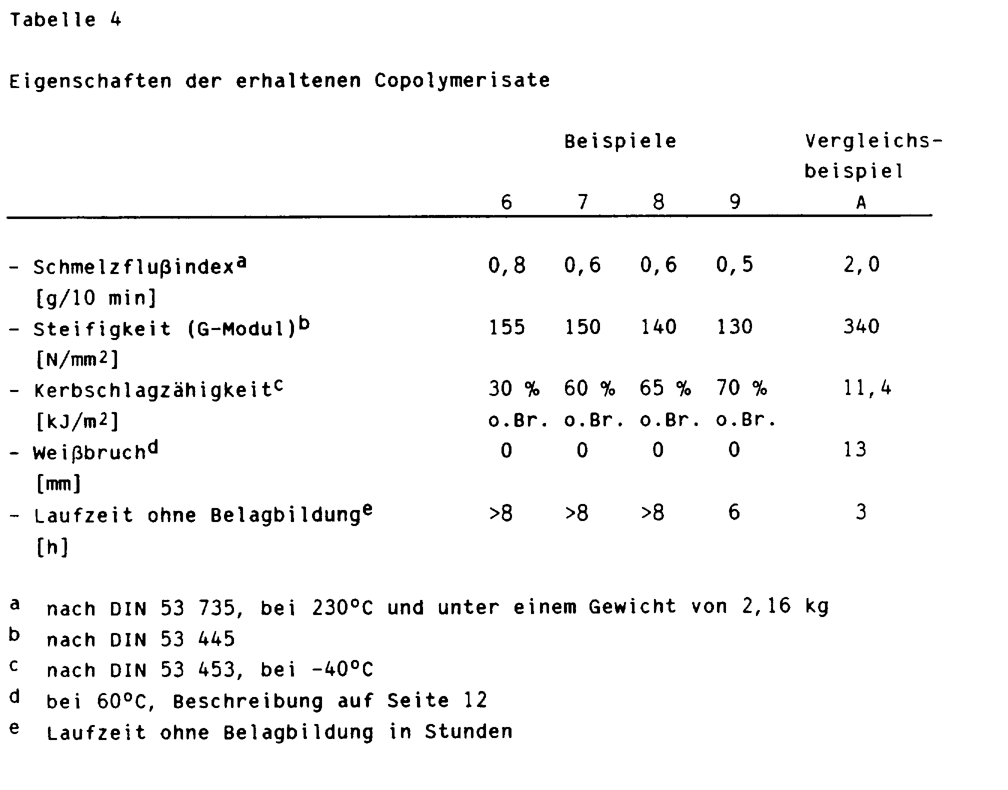

## Patentansprüche

1. Propylen-Ethylen-Copolymerisate mit hohem Kautschukgehalt, erhältlich durch zweistufige Polymerisation aus der Gasphase heraus in einem bewegten Festbett, mittels eines Ziegler-Natta-Katalysatorsystems, das neben einer titanhaltigen Feststoffkomponente noch als Cokatalysator eine Aluminiumverbindung enthält, wobei man
in einer ersten Polymerisationsstufe bei einem Druck von 20 bis 40 bar, einer Temperatur von 60 bis 90°C und einer mittleren Verweilzeit des Reaktionsgemisches von 1 bis 5 Stunden Propylen polymerisiert und anschließend
in einer zweiten Polymerisationsstufe bei einem Druck von 5 bis 30 bar, wobei dieser Druck wenigstens 7 bar unter dem Druck der ersten Polymerisationsstufe liegt, einer Temperatur von 65 bis 100°C und einer mittleren Verweilzeit des Reaktionsgemisches von 1 bis 5 Stunden, dem aus der ersten Polymerisationsstufe ausgebrachten Polymerisat ein Gemisch aus Propylen und Ethylen hinzupolymerisiert, dabei das Verhältnis der Partialdrücke zwischen Propylen und Ethylen im Bereich von 0,5 : 1 bis 5 : 1 einstellt, das Gewichtsverhältnis zwischen den in der ersten und den in der zweiten Polymerisationsstufe umgesetzten Monomeren so bemißt, daß es im Bereich von 2,5 : 1 bis 1 : 2,5 liegt und die Polymerisation in der zweiten Polymerisationsstufe in Gegenwart eines C₁-C₈-Alkanols und einer zusätzlich eingebrachten, als Cokatalysator dienenden Aluminiumverbindung vornimmt.

2. Propylen-Ethylen-Copolymerisate nach Anspruch 1, erhältlich nach einem Verfahren, wobei man die Polymerisation in der zweiten Polymerisationsstufe bei Temperaturen von 70 bis 90°C durchführt.

3. Propylen-Ethylen-Copolymerisate nach Anspruch 1 oder 2, erhältlich nach einem Verfahren, wobei man das Gewichtsverhältnis zwischen den in der ersten und den in der zweiten Polymerisationsstufe umgesetzten Monomeren so bemißt, daß es im Bereich von 2,0 : 1 bis 1 : 2,5 liegt.

4. Propylen-Ethylen-Copolymerisate nach den Ansprüchen 1 bis 3, erhältlich nach einem Verfahren, wobei man die Polymerisation in der zweiten Polymerisationsstufe in Gegenwart eines C₁-C₄-Alkanols vornimmt.

5. Propylen-Ethylen-Copolymerisate nach den Ansprüchen 1 bis 4, wobei man die Polymerisation in der zweiten PolymerisationsStufe in Gegenwart einer Zusätzlich eingebrachten, als Katalysator dienenden titanhaltigen Feststoffkomponente durchführt.

6. Verfahren zur Herstellung von Propylen-Ethylen-Copolymerisaten gemäß den Ansprüchen 1 bis 5 in einem bewegten Festbett, wobei man aus der Gasphase heraus zunächst in einer ersten Polymerisationsstufe bei einem Druck von 20 bis 40 bar, einer Temperatur von 60 bis 90°C und einer mittleren Verweilzeit des Reaktionsgemisches von 1 bis 5 Stunden, mit Hilfe eines Ziegler-Natta-Katalysatorsystems, das neben einer titanhaltigen Feststoffkomponente noch als Cokatalysator eine Aluminiumverbindung enthält, Propylen polymerisiert und in einer zweiten Polymerisationsstufe bei einem Druck von 5 bis 30 bar, wobei dieser Druck wenigstens 7 bar unter dem Druck der ersten Polymerisationsstufe liegt, und einer mittleren Verweilzeit des Reaktionsgemisches von 1 bis 5 Stunden, dem aus der ersten Polymerisationsstufe ausgebrachten Polymerisat ein Gemisch aus Ethylen und Propylen hinzupolymerisiert, dadurch gekennzeichnet, daß man die Polymerisation in der zweiten Polymerisationsstufe bei einer Temperatur von 65 bis 100°C und in Gegenwart eines C₁-C₈-Alkanols und einer zusätzlich eingebrachten, als Cokatalysator dienenden Aluminiumverbindung vornimmt und das Gewichtsverhältnis zwischen den in der ersten und den in der zweiten Polymerisationsstufe umgesetzten Monomeren so bemißt, daß es im Bereich von 2,5 : 1 bis 1 : 2,5 liegt.

7. Folien und Formkörper aus den Propylen-Ethylen-Copolymerisaten nach den Ansprüchen 1 bis 5.

## Claims

1. Propylene-ethylene copolymers having a high rubber content, obtainable by two-stage polymerization from the gas phase in a moving bed of solids, by means of a Ziegler-Natta catalyst system comprising, in addition to a titanium-containing solid component, an aluminum compound as cocatalyst, by
conducting a first polymerization stage at a pressure from 20 to 40 bar and a temperature from 60 to 90°C to polymerize propylene with an average reaction mixture residence time from 1 to 5 hours, and then
conducting a second polymerization stage at a pressure from 5 to 30 bar, this pressure being at least 7 bar below the pressure of the first polymerization stage, and a temperature from 65 to 100°C to polymerize a mixture of propylene and ethylene with an average reaction mixture residence time from 1 to 5 hours onto the polymer discharged from the first polymerization stage, by setting the ratio of the partial pressures between propylene and ethylene within the range from 0.5:1 to 5:1, determining the weight ratio between the monomers used in the first polymerization stage and the monomers used in the second polymerization stage so that it is within the range from 2.5:1 to 1:2.5, and effecting the second stage polymerization in the presence of a C₁-C₈-alkanol and of an additionally introduced aluminum compound serving as cocatalyst.

2. Propylene-ethylene copolymers as claimed in claim 1, obtainable by a process in which the second stage polymerization is carried out at temperatures from 70 to 90°C.

3. Propylene-ethylene copolymers as claimed in claim 1 or 2, obtainable by a process in which the weight ratio between the monomers used in the first polymerization stage and the monomers used in the second polymerization stage is within the range from 2.0:1 to 1:2.5.

4. Propylene-ethylene copolymers as claimed in any of claims 1 to 3, obtainable by a process in which the second stage polymerization is carried out in the presence of a C₁-C₄-alkanol.

5. Propylene-ethylene copolymers as claimed in any of claims 1 to 4, wherefor the second stage polymerization is carried out in the presence of an additionally introduced titanium-containing solid component serving as catalyst.

6. A process for preparing propylene-ethylene copolymers as set forth in any of claims 1 to 5 in a moving bed of solids from the gas phase by a first polymerization stage at a pressure from 20 to 40 bar and a temperature from 60 to 90°C by means of a Ziegler-Natta catalyst system comprising in addition to a titanium-containing solid component an aluminum compound as cocatalyst to polymerize propylene with an average reaction mixture residence time from 1 to 5 hours and a second polymerization stage at a pressure from 5 to 30 bar, this pressure being at least 7 bar below the pressure of the first polymerization stage, to polymerize a mixture of ethylene and propylene with an average reaction mixture residence time from 1 to 5 hours onto the polymer discharged from the first polymerization stage, characterized in that the second stage polymerization is carried out at a temperature from 65 to 100°C and in the presence of a C₁-C₈-alkanol and of an additionally introduced aluminum compound serving as cocatalyst and the weight ratio between the monomers used in the first polymerization stage and the monomers used in the second polymerization stage is determined so that it is within the range from 2.5:1 to 1:2.5.

7. Two- and three-dimensional articles molded from the propylene-ethylene copolymers of claims 1 to 5.

## Revendications

1. Copolymères propylène/éthylène à teneur élevée en caoutchouc, obtenus par polymérisation en deux étapes en phase gazeuse dans un lit de matière solide mis en mouvement, au moyen d'un système catalytique de Ziegler-Natta qui contient comme co-catalyseur, en plus d'un composant solide contenant du titane, un composé de l'aluminium,
du propylène étant polymérisé, dans une première étape de polymérisation, sous une pression de 20 à 40 bar, à une température de 60 à 90°C et avec une durée de séjour moyenne du mélange réactionnel de 1 à 5 h, puis,
dans une seconde étape de polymérisation, un mélange de propylène et d'éthylène étant polymérisé additionnellement sur le polymère produit dans la première étape de polymérisation, sous une pression de 5 à 30 bar, cette pression étant inférieure d'au moins 7 bar à la pression de la première étape de polymérisation, à une température de 65 à 100°C et avec une durée de séjour moyenne du mélange réactionnel de 1 à 5 h, le rapport des pressions partielles entre le propylène et l'éthylène étant réglé dans la plage comprise entre 0,5:1 et 5:1, le rapport pondéral entre les monomères mis en réaction dans les première et seconde étapes de polymérisation étant fixé de sorte qu'il se situe dans la plage comprise entre 2,5:1 et 1:2,5, et la polymérisation dans la seconde étape de polymérisation étant conduite en présence d'un alcanol en C₁-C₈ et d'un composé de l'aluminium introduit en plus et servant de co-catalyseur.

2. Copolymères propylène/éthylène selon la revendication 1, obtenus par un procédé dans lequel, dans la seconde étape de polymérisation, on conduit la polymérisation à des températures de 70 à 90°C.

3. Copolymères proapyléne/éthylène selon la revendication 1 ou 2, obtenus par un procédé dans lequel on fixe le rapport pondéral entre les monomères mis en réaction dans les première et seconde étapes de polymérisation de sorte qu'il se situe dans la plage de 2,0:1 à 1:2,5.

4. Copolymères propylène/éthylène selon l'une quelconque des revendications 1 à 3, obtenus par un procédé dans lequel, dans la seconde étape de polymérisation, on conduit la polymérisation en présence d'un alcanol en C₁-C₄.

5. Copolymères propylène/éthylène selon l'une quelconque des revendications 1 à 4, obtenus par un procédé dans lequel, dans la seconde étape de polymérisation, on effectue la polymérisation en présence d'un composant solide contenant du titane, introduit en plus et servant de catalyseur.

6. Procédé de préparation de copolymères propylène/ éthylène selon l'une quelconque des revendications 1 à 5 dans un lit de matière solide mis en mouvement, dans lequel, dans une première étape de polymérisation, on commence par polymériser du propylène en phase gazeuse sous une pression de 20 à 40 bar, à une température de 60 à 90°C et avec une durée de séjour moyenne du mélange réactionnel de 1 à 5 h, au moyen d'un système catalytique de Ziegler-Natta qui contient comme cocatalyseur, en plus d'un composant solide contenant du titane, un composé de l'aluminium et, dans une seconde étape de polymérisation, on polymérise additionnellement un mélange d'éthylène et de propylène sur le polymère produit dans la première étape de polymérisation, sous une pression de 5 à 30 bar, cette pression étant inférieure d'au moins 7 bar à la pression de la première étape de polymérisation, et avec une durée de séjour moyenne du mélange réactionnel de 1 à 5 h, caractérisé en ce que, dans la seconde étape de polymérisation, on effectue la polymérisation à une température de 65 à 100°C et en présence d'un alcanol en C₁-C₈ et d'un composé de l'aluminium introduit en plus et servant de co-catalyseur, et on fixe le rapport pondéral entre les monomères mis en réaction dans les première et seconde étapes de polymérisation de sorte qu'il se situe dans la plage de 2,5:1 à 1:2,5.

7. Feuilles et corps moulés obtenus à partir des copolymères propylène/éthylène selon l'une quelconque des revendications 1 à 5.
